# EUROPÄISCHE PATENTSCHRIFT

(11) **EP 2 356 001 B1**
(45) Veröffentlichungstag und Bekanntmachung des Hinweises auf die Patenterteilung: **03.10.2012**
(21) Anmeldenummer: 09780986.7
(22) Anmeldetag: 23.07.2009
(51) Int. Cl.: B60S 1/16, F16H 1/16, H02K 7/08, H02K 7/116, F16H 57/04

(54) **SCHNECKENGETRIEBE**
WORM GEAR
TRANSMISSION A ROUE ET VIS SANS FIN

(30) Priorität: 22.09.2008 DE 102008042245
(43) Veröffentlichungstag der Anmeldung: 17.08.2011
(73) Patentinhaber: Robert Bosch GmbH, 70442 Stuttgart (DE)
(72) Erfinder: KASTINGER, Guenter, 76571 Gaggenau-Sulzbach (DE); HUESGES, Mario, 77830 Buehlertal (DE); OBERT, Mike, 76593 Gernsbach (DE); LAUK, Detlef, 77871 Renchen (DE); RIEDINGER, Klaus, 76571 Gaggenau (DE)
(86) Internationale Anmeldenummer: PCT/EP2009/059498
(87) Internationale Veröffentlichungsnummer: WO 2010/031624

(56) Entgegenhaltungen:
- DE-A1- 10 313 226
- DE-A1-102004 012 121
- JP-A- 60 176 437
- JP-A- 60 176 438
- US-A- 1 457 910
- US-A- 5 651 425

## Beschreibung

### Stand der Technik

Die Erfindung betrifft ein Schneckengetriebe, vorzugsweise für eine Motor-Getriebeeinheit einer Scheibenwischanlage eines Kraftfahrzeuges, gemäß dem Oberbegriff des Anspruchs 1. Ferner betrifft die Erfindung eine Motor-Schneckengetriebeeinheit, insbesondere für eine Scheibenwischanlage eines Kraftfahrzeuges, gemäß dem Anspruch 10.

Die gattungsgemäβe US 1,457,910 offenbart ein Schneckengetriebe nach dem Oberbegriff des Anspruchs 1.

Bekannte Getriebe von Scheibenwischanlagen umfassen ein drehfest mit einer Abtriebswelle verbundenes Schneckenrad (Abtriebsrad), welches mittels eines als Sinter-Gleitlager ausgebildeten Radiallagers innerhalb eines Gehäusedoms des Getriebegehäuses drehbar gelagert ist. Die Schmierung des Sinter-Gleitlagers wird nur durch eine geringe Menge an Schmieröl, die das Sinterlager aufgrund seiner Porosität aufnehmen kann, gewährleistet. Ein zusätzlich eingebrachter Fettvorrat im Bereich der Lagerung würde innerhalb kürzester Zeit in ungewünschte Bereiche des Getriebegehäuses austreten und dort zu Problemen führen.

### Offenbarung der Erfindung

### Technische Aufgabe

Der Erfindung liegt die Aufgabe zugrunde, ein Getriebe vorzuschlagen, bei dem eine optimale Schmierung des Abtriebswellenlagers dauerhaft gewährleistet ist. Ferner besteht die Aufgabe darin, eine Motor-Getriebeeinheit mit einem entsprechend optimierten Getriebe vorzuschlagen.

### Technische Lösung

Diese Aufgabe wird mit einem Schneckengetriebe mit den Merkmalen des Anspruchs 1 gelöst. Hinsichtlich der Motor-Schneckengetriebeeinheit wird die Aufgabe mit den Merkmalen des Anspruchs 10 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, dem vorzugsweise als Sinterlager, insbesondere als Sinterbronze-Gleitlager, ausgebildeten Abtriebswellenlager des Getriebes einen Schmiermittelvorratsraum zuzuordnen, in dem eine für die Lebensdauer des Getriebes ausreichende Schmiermittelmenge bevorratet werden kann. Um zu verhindern, dass Schmiermittel in unerwünschte Bereiche des Getriebegehäuses vordringen kann, schlägt die Erfindung vor, am Abtriebsrad Fördermittel zum (Rück-)Fördern von Schmiermittel in Richtung zu dem Schmiermittelvorratsraum vorzusehen. Anders ausgedrückt wird ein unerwünschter Schmiermittelaustritt in unerwünschte Bereiche, insbesondere in einen Bereich benachbart zu einer von dem Schmiermittelvorratsraum abgewandten Stirnseite des Abtriebsrades, dadurch verhindert, dass das aus dem Schmiermittelvorratsraum austretende Schmiermittel mit am Abtriebsrad vorgesehenen Fördermitteln zurück zum Schmiermittelvorratsraum gefördert wird. Auf eine zusätzliche Abdichtung des Schmiermittelvorratsraums mit Hilfe einer Ringdichtung (Lippendichtung) kann aufgrund des Vorsehens der Fördermittel mit Vorteil verzichtet werden. Das Vorsehen eines Schmiermittelvorratsraums in Kombination mit am Abtriebsrad vorgesehenen Fördermitteln gewährleistet also zum einen eine optimale und dauerhafte Schmierung des Abtriebswellenlagers und verhindert zum anderen einen unerwünschten Schmiermittelaustritt.

In Weiterbildung der Erfindung ist mit Vorteil vorgesehen, dass die Fördermittel derart ausgebildet sind, dass diese das Schmiermittel drehrichtungsunabhängig hin zu dem Schmiermittelvorratsraum fördern. Auf diese Weise wird sichergestellt, dass das Schmiermittel unabhängig von der Antriebsrichtung des Abtriebsrades zurück zum Schmiermittelvorratsraum transportiert wird.

Ganz besonders bevorzugt ist eine Ausführungsform, bei der die Fördermittel (zumindest zum Teil) berührungsfrei arbeiten, also ein Gehäuse des Getriebes nicht berühren, wodurch eine mechanische Abnutzung, wie sie beispielsweise bei einer Abdichtung des Schmiermittelvorratsraumes mittels einer Lippendichtung auftreten würde, mit Vorteil vermieden wird.

Erfindungsgemäβ weisen die Fördermittel mindestens eine erste Leitfläche auf, die derart ausgebildet und angeordnet ist, dass sie Schmiermittel zurück in Richtung des Schmiermittelvorratsraumes transportiert. Erfindungsgemäβ ist die erste Leitfläche dabei derart angeordnet, dass sie Schmiermittel in radialer Richtung nach innen abtransportiert. Es ist vorgesehen, dass die Leitfläche mit einer in Bezug auf die Abtriebswelle radialen Achse (Radialen) einen Winkel einschließt und/oder eine geschwungene bzw. gebogene Form aufweist, um einen Schmiermitteltransport in radialer Richtung nach innen zu ermöglichen.

Erfindungsgemäβ ist mit Vorteil vorgesehen, dass der mindestens einen ersten Leitfläche ein Leitabschnitt des Abtriebsrades zugeordnet ist, bei dem es sich vorzugsweise um einen im Spritzgussverfahren angeformten, stirnseitigen, erhabenen Bereich aus Kunststoff handelt. Dabei bildet die mindestens eine erste Leitfläche eine Flanke des Leitabschnittes, die, zumindest näherungsweise, mit ihrer Flächenerstreckung in eine Umfangsrichtung weist. Es ist vorgesehen, dass diese erste Leitfläche des Leitabschnittes mit einer zweiten, gegenüberliegenden Leitfläche eines Axiallagerabschnittes zusammenwirkt und mit der zweiten Leitfläche einen sich im Wesentlichen in radialer Richtung nach innen erstreckenden Schmiermittelkanal seitlich begrenzt, durch den Schmiermittel bei Rotation des Abtriebsrades von den Leitflächen in radialer Richtung nach innen transportiert wird. Bei dem Axiallagerabschnitt handelt es sich bevorzugt um einen stirnseitig erhabenen Bereich des Abtriebsrades, an dessen in Umfangsrichtung orientierter Flanke die zweite Leitfläche gebildet ist. Stirnseitig stützt sich das Abtriebsrad mit dem Axiallagerabschnitt an einem feststehenden Bauteil, insbesondere am Getriebegehäuse oder einem im Getriebegehäuse angeordneten Bauteil, ab.

In Weiterbildung der Erfindung ist mit Vorteil vorgesehen, dass die Umfangserstreckung des die mindestens eine erste Leitfläche aufweisenden Leitabschnittes in radialer Richtung von radial außen nach radial innen abnimmt. Dabei ist es besonders bevorzugt, wenn der Leitabschnitt spiegelsymmetrisch zu einer eine radiale Achse (Radiale) aufnehmenden Spiegelebene ausgebildet ist, also zwei voneinander abgewandte, in einander entgegengesetzte Umfangsrichtung weisende, erste Leitflächen aufweist. Dabei ist es besonders bevorzugt, wenn jeder ersten Leitfläche eine, mit der jeweiligen ersten Leitfläche einen Schmiermittelkanal begrenzende zweite Leitfläche zugeordnet ist.

Besonders gute Förderergebnisse können erzielt werden, wenn der Leitabschnitt mit Radialabstand zu einem, vorzugsweise zylindrischen, Nabenabschnitt des Abtriebsrades angeordnet ist, um eine verbesserte Anströmung eines radial zwischen dem Nabenabschnitt und dem Gehäuse oder einem Einbauteil ausgebildeten, sich in axialer Richtung erstreckenden Kanal, insbesondere Ringkanal, zu ermöglichen, durch welchen zum einen Schmiermittel in Richtung der Fördermittel austreten und zum anderen Schmiermittel von den Fördermitteln in Richtung des Schmiermittelvorratsraumes abtransportiert werden kann.

Ganz besonders bevorzugt ist eine Ausführungsform, bei der der Schmiermittelvorratsraum als von der Abtriebswelle axial durchsetzter Ringraum ausgebildet ist. Weiter bevorzugt ist der Schmiermittelvorratsraum radial außen von einem Gehäuse des Getriebes begrenzt und in axialer Richtung über mindestens einen als Ringkanal ausgebildeten Förderkanal mit den Fördermitteln verbunden, wobei die Fördermittel das Schmiermittel über den Strömungskanal zurück zum Schmiermittelvorratsraum transportieren.

Die Erfindung führt auch auf eine Motor-Getriebeeinheit, insbesondere für eine Scheibenwischanlage eines Kraftfahrzeuges. Die Motor-Getriebeeinheit zeichnet sich durch ein zuvor beschriebenes Getriebe aus, das mit Hilfe eines Elektromotors antreibbar ist.

In Weiterbildung der Erfindung ist mit Vorteil vorgesehen, dass für den Elektromotor und das Getriebe ein gemeinsames, als Schalengehäuse ausgebildetes, Gehäuse vorgesehen ist, wobei das Schalengehäuse aus insgesamt zwei Schalenteilen besteht. Besonders bevorzugt ist es dabei, wenn die Schalenteile aus einem ferromagnetischen Werkstoff, insbesondere aus ferromagnetischem Metall, zur Optimierung der elektromagnetischen Verträglichkeit (EMV) der Motor-Getriebeeinheit ausgebildet sind. Weiter bevorzugt ist es, wenn die Schalenteile nicht identisch, sondern asymmetrisch relativ zueinander ausgebildet sind, wobei eines der Schalenteile zur Aufnahme bzw. zum Tragen des Elektromotors und des Getriebes dient und dem anderen, vorzugsweise in gewissen Grenzen elastisch verformbaren, Schalenteil im Wesentlichen nur eine Gehäusedeckelfunktion, also Verschlussfunktion, mit Toleranzausgleichsfunktion zukommt.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: eine Motor-Getriebeeinheit in einer Schnittansicht, und
- Fig. 2: das Abtriebsrad des Getriebes der Motor-Getriebeeinheit gemäß Fig. 1 in einer perspektivischen Ansicht von unten.

### Ausführungsformen der Erfindung

In den Figuren sind gleiche Elemente und Elemente mit der gleichen Funktion mit den gleichen Bezugszeichen gekennzeichnet.

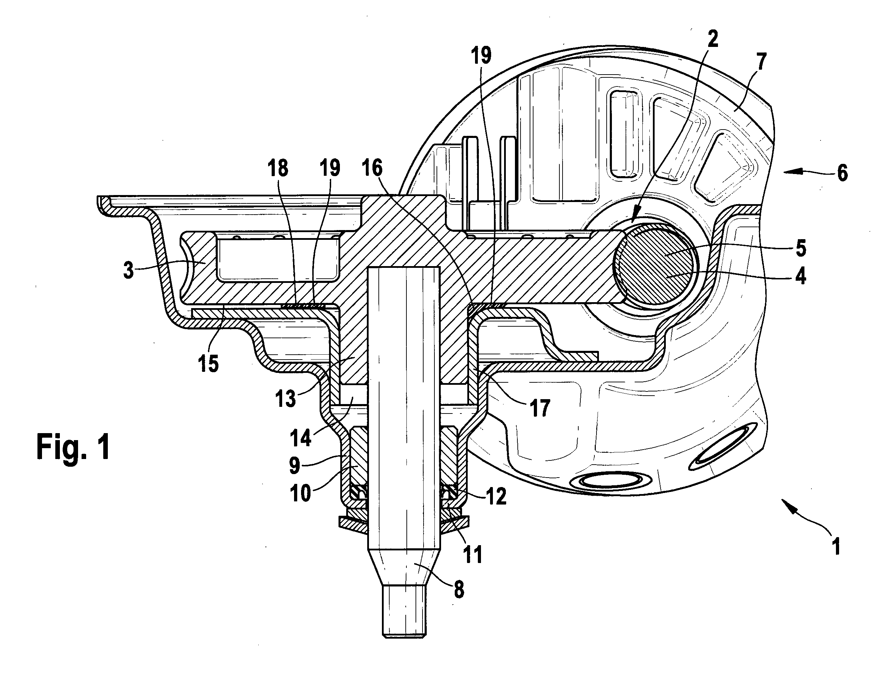

In Fig. 1 ist in einer Schnittansicht eine Motor-Getriebeeinheit 1 für eine nicht dargestellte Scheibenwischanlage eines Kraftfahrzeuges gezeigt. Die Motor-Getriebeeinheit 1 umfasst ein als Schneckengetriebe ausgebildetes Getriebe 2 mit einem als Schneckenrad ausgebildeten Abtriebsrad 3, welches drehmomentübertragend mit einer Getriebeschnecke 4 wirkverbunden ist, die auf einer Ankerwelle 5 eines Elektromotors 6 sitzt. Dem Elektromotor 6 und dem Getriebe 2 ist ein gemeinsames, als Schalengehäuse ausgebildetes Gehäuse 7 aus Metall zugeordnet, welches sowohl den Elektromotor 6 mit aus Fig. 1 nicht ersichtlichem Polgehäuse als auch das Getriebe 2 umschließt. Das Gehäuse 7 wird durchsetzt von einer Abtriebswelle 8, die wiederum drehfest mit dem als Schneckenrad ausgebildeten Abtriebsrad 3 verbunden ist. Die Abtriebswelle 8 ist dabei derart angeordnet und ausgerichtet, dass sie sich in einen Domabschnitt 9 des Gehäuses 7 hineinerstreckt. Innerhalb des Domabschnittes 9 ist ein als Sinter(-bronze)-Gleitlager ausgebildetes Abtriebswellenlager 10 angeordnet. Axial zwischen dem als Sinterlager ausgebildeten Abtriebswellenlager 10 und einem stirnseitigen Gehäusewandabschnitt 11 des Domabschnittes 9 befindet sich eine als Lippendichtung ausgebildete Ringdichtung 12, die einen Austritt von Schmiermittel aus dem Gehäuse 7 vermeidet. Hierzu liegt die Ringdichtung 12 radial innen an der sie durchsetzenden Abtriebswelle 8 an.

Auf der von der Ringdichtung 12 abgewandten Seite ist axial zwischen einem Nabenabschnitt 13 des Abtriebsrades 3 und dem Abtriebswellenlager 10 ein als von der Abtriebswelle 8 durchsetzter und radial innen begrenzter, als Ringraum ausgebildeter Schmiermittelvorratsraum 14 ausgebildet. Dieser ist mit Schmiermittel gefüllt, so dass eine dauerhafte und optimale Schmierung des Abtriebswellenlagers 10 über die Lebensdauer der Motor-Getriebeeinheit 1, genauer über die Lebensdauer des Getriebes 2, sichergestellt ist.

Wie sich aus Fig. 1 ergibt, ist das Abtriebsrad 3 mit Hilfe des zylindrischen Nabenabschnittes 13 innerhalb des Domabschnittes 9 des Gehäuses 7 gleitend gelagert. Zur axialen Abstützung ist an einer in der Zeichnungsebene unteren, dem Schmiermittelvorratsraum 14 zugewandten Stirnseite 15 des Abtriebsrades 3 ein mehrteiliger Axiallagerabschnitt 16 zugeordnet, mit dem sich das Abtriebsrad 3 stirnseitig an einem metallischen Einsatzteil 17 abstützt, welches sich in den Domabschnitt 9 erstreckt und gleichzeitig den Nabenabschnitt 13 des Abtriebsrades 3 in radialer Richtung stützt. Die Axiallagerabschnitte 16 sowie diesen zugeordnete Leitabschnitte 18 sind Bestandteil von Fördermitteln 19 zur Rückförderung von Schmiermittel hin zum Schmiermittelvorratsraum 14.

Während des Betriebs der Motor-Getriebeeinheit 1 gelangt Schmiermittel aus dem Schmiermittelvorratsraum 14 in einen Bereich zwischen der (unteren) Stirnseite 15 des Abtriebsrades 3 und dem Einbauteil 17 aus Metall. Hierbei strömt das Schmiermittel in axialer Richtung durch einen zwischen dem Nabenabschnitt 13 und dem Einbauteil 17 gebildeten Ringkanal. Um eine weitere Ausbreitung des Schmiermittels im Gehäuse 7 zu vermeiden, transportieren die Fördermittel 19 bei Rotation des Abtriebsrades 3 das Schmiermittel zurück in radialer Richtung nach innen, wo das Schmiermittel durch den eben erwähnten Ringkanal in axialer Richtung zurück zum Schmiermittelvorratsraum 14 strömen kann.

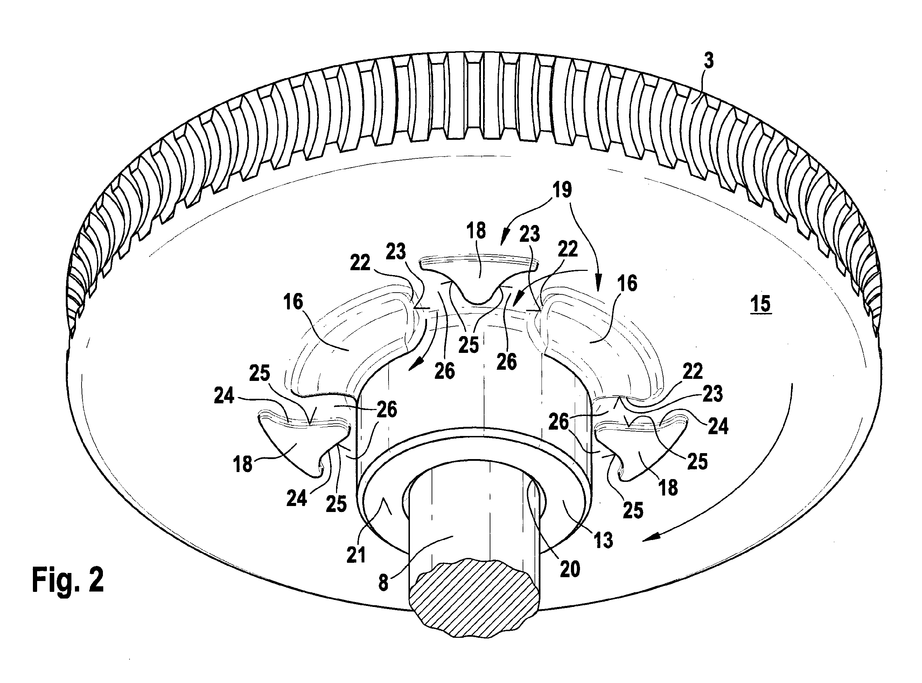

In Fig. 2 ist eine perspektivische Darstellung des Abtriebsrades 3 in einer Ansicht von schräg unten auf die Stirnseite 15 gezeigt. Zu erkennen ist, dass in einer Sacklochöffnung 20 des Abtriebsrades 3 die Abtriebswelle 8 drehfest aufgenommen ist. Die in der Zeichnungsebene untere, ringförmige Stirnfläche 21 des Nabenabschnittes 13 begrenzt den in Fig. 1 gezeigten Schmiermittelvorratsraum 14 in axialer Richtung in der Zeichnungsebene nach oben. Während des Betriebs der Motor-Getriebeeinheit 1, also bei Rotation des Abtriebsrades 3, gelangt Schmiermittel aus dem Schmiermittelvorratsraum 14 außen an dem Nabenabschnitt 13 vorbei zur Stirnseite 15 des Abtriebsrades 3. Dort tritt das Schmiermittel unmittelbar in Wechselwirkung mit den Fördermitteln 19 aus Kunststoff, bei denen es sich um an das Abtriebsrad 3 im Spritzgussverfahren angeformte, sich in Richtung des Schmiermittelvorratsraums 14 erhebende Erhöhungen handelt. Die Fördermittel 19 umfassen drei gleichmäßig in Umfangsrichtung verteilte Axiallagerabschnitte 16, die das Abtriebsrad 3 stirnseitig auf dem in Fig. 1 gezeigten Einsatzteil 17 abstützen. Jeder Axiallagerabschnitt 16 weist zwei in einander entgegengesetzte Umfangsrichtung weisende Flanken 22 auf, wobei jede Flanke 22 eine zweite Leitfläche 23 bildet, die zu einer Radialen geneigt ist. Die Umfangserstreckung der Axiallagerabschnitte 16 nimmt in radialer Richtung von außen nach innen ab, so dass die zweiten Leitflächen 23 zu diesen zugeordneten, gedachten Radialen geneigt sind.

In Umfangsrichtung zwischen jeweils zwei Axiallagerabschnitten 16 ist ein Leitabschnitt 18 angeordnet; insgesamt sind also drei, um 120° zueinander versetzte Leitabschnitte 18 vorgesehen, wobei jeder Leitabschnitt 18 zwei in einander entgegengesetzte Umfangsrichtung weisende Flanken 24 aufweist, die jeweils eine erste Leitfläche 25 bilden. Die Leitabschnitte 18 sind spiegelsymmetrisch zu jeweils einer gedachten, eine zugehörige Radiale aufnehmenden Spiegelebene ausgebildet, was in Kombination mit der Anordnung der Axialabschnitte 16 dazu führt, dass Schmiermittel drehrichtungsunabhängig in radialer Richtung bei Rotation des Abtriebsrades 3 nach innen gefördert wird. Die Höhenerstreckung der Leitabschnitte 18 ist so bemessen, dass die Leitabschnitte 18 keinen unmittelbaren Kontakt zu dem Gehäuse 7 oder dem Einsatzteil 17 aufweisen, also berührungslos arbeiten.

Wie sich aus Fig. 2 ergibt, ist jeweils zwischen einander zugewandten ersten und zweiten Leitflächen 25, 23 ein sich gekrümmt in radialer Richtung nach innen erstreckender Schmiermittelkanal 26 ausgebildet, durch den Schmiermittel in radialer Richtung nach innen abtransportiert wird.

Wie sich ferner aus Fig. 2 ergibt, nimmt die Umfangserstreckung der Leitabschnitte 18 in radialer Richtung nach innen ab, wobei die voneinander abgewandten Flanken 24 bzw. ersten Leitflächen 25 einen bogenförmigen Verlauf aufweisen.

Aus Fig. 2 ist ferner zu entnehmen, dass die Leitabschnitte 18 mit Radialabstand zu dem Nabenabschnitt 13 angeordnet sind.

## Patentansprüche

1. Schneckengetriebe, vorzugsweise für eine Motor-Schneckengetriebeeinheit (1) einer Scheibenwischanlage eines Kraftfahrzeugs, umfassend ein Abtriebsrad (3) und eine drehmomentübertragend mit dem Abtriebsrad (3) gekoppelte Abtriebswelle (8), die mit einem Abtriebswellenlager (10) drehbar gelagert ist, **wobei** an dem Abtriebsrad (3) Fördermittel (19) zum Fördern von Schmiermittel hin zu einem dem Abtriebswellenlager (10) zugeordneten Schmiermittelvorratsraum (14) vorgesehen sind, wobei die Fördermittel (19) mindestens eine sich in radialer Richtung erstreckende und mit einer Radialen einen Winkel einschließende und/oder geschwungene erste Leitfläche (25) aufweisen, die zum Fördern des Schmiermittels in radialer Richtung nach innen ausgebildet und angeordnet ist, wobei die erste Leitfläche (25) als Flanke (24) eines Leitabschnittes (18) ausgebildet ist, **dadurch gekennzeichnet, dass** von der ersten Leitfläche (25) des Leitabschnittes (18) und einer in Umfangsrichtung von dem Leitabschnitt (18) beabstandeten zweiten Leitfläche (23) eines Axiallagerabschnitts (16) ein sich in radialer Richtung erstreckender Schmiermittelkanal (26) gebildet ist.

2. Schneckengetriebe nach Anspruch 1,
**dadurch gekennzeichnet,**
**dass** die Fördermittel (19) derart ausgebildet sind, dass diese das Schmiermittel drehrichtungsunabhängig hin zu dem Schmiermittelvorratsraum (14) fördern.

3. Schneckengetriebe nach einem der Ansprüche 1 oder 2,
**dadurch gekennzeichnet, dass** das Abtriebswellenlager (10) als Sinterlager ausgebildet ist.

4. Schneckengetriebe nach Anspruch 1,
**dadurch gekennzeichnet,**
**dass** die erste Leitfläche (25) pflugartig geschwungen und der Schmiermittelkanal (26) gekrümmt ausgebildet ist.

5. Schneckengetriebe nach Anspruch 1,
**dadurch gekennzeichnet**
**dass** die Umfangserstreckung des Leitabschnittes (18) in radialer Richtung nach innen abnimmt.

6. Schneckengetriebe nach einem der vorhergehenden Ansprüche,
**dadurch gekennzeichnet,**
**dass** der Leitabschnitt (18) spiegelsymmetrisch zu einer eine Radiale aufnehmenden Spiegelebene ausgebildet ist.

7. Schneckengetriebe nach einem der Ansprüche 1 bis 6,
**dadurch gekennzeichnet,**
**dass** der Leitabschnitt (18) zwei, in einander entgegengesetzte Umfangsrichtungen zeigende erste Leitflächen (25) aufweist, die vorzugsweise einen geschwungenen Verlauf aufweisen.

8. Schneckengetriebe nach einem der Ansprüche 1 bis 7,
**dadurch gekennzeichnet,**
**dass** der Leitabschnitt (18) mit Radialabstand zu einem, vorzugsweise zylindrischen, Nabenabschnitt (13) des Abtriebsrades (3) angeordnet ist.

9. Schneckengetriebe nach einem der vorhergehenden Ansprüche,
**dadurch gekennzeichnet,**
**dass** der Schmiermittelvorratsraum (14) als von der Abtriebswelle (8) axial durchsetzter Ringraum ausgebildet ist, der vorzugsweise radial außen von einem Gehäuse (7) und radial innen von der Abtriebswelle (8) begrenzt ist.

10. Motor-Schneckengetriebeeinheit, insbesondere für eine Scheibenwischanlage eines Kraftfahrzeugs, mit einem ein Schneckengetriebe (2) nach einem der vorhergehenden Ansprüche antreibenden Elektromotor (6).

11. Motor-Schneckengetriebeeinheit nach Anspruch 10,
**dadurch gekennzeichnet,**
**dass** der Elektromotor (6) und das Schneckengetriebe (2) in einem gemeinsamen, als Schalengehäuse mit zwei Schalenteilen ausgebildeten Gehäuse (7), vorzugsweise aus Metall, angeordnet sind.

## Claims

1. Worm gear, preferably for a motor-worm gear unit (1) of a windscreen washing system of a motor vehicle, comprising a drive output wheel (3) and a drive output shaft (8) which is coupled in torque-transmitting fashion to the drive output wheel (3) and which is rotatably mounted in a drive output shaft bearing (10), wherein on the drive output wheel (3) there are provided delivery means (19) for delivering lubricant to a lubricant reservoir (14) assigned to the drive output shaft bearing (10), wherein the delivery means (19) have at least one first guide surface (25) which extends in the radial direction, which encloses an angle with a radial line and/or is curved and which is designed and arranged so as to deliver the lubricant in the radially inward direction, wherein the first guide surface (25) is formed as a flank (24) of a guide portion (18), **characterized in that** a lubricant duct (26) which extends in the radial direction is formed by the first guide surface (25) of the guide portion (18) and by a second guide surface (23), which is spaced apart from the guide portion (18) in the circumferential direction, of an axial bearing portion (16).

2. Worm gear according to Claim 1,
**characterized**
**in that** the delivery means (19) are designed so as to deliver the lubricant to the lubricant reservoir (14) independently of the direction of rotation.

3. Worm gear according to either of Claims 1 and 2,
**characterized in that** the drive output shaft bearing (10) is formed as a sintered bearing.

4. Worm gear according to Claim 1,
**characterized**
**in that** the first guide surface (25) is curved in the manner of a plough, and the lubricant duct (26) is of curved form.

5. Worm gear according to Claim 1,
**characterized**
**in that** the circumferential extent of the guide portion (18) decreases in the radially inward direction.

6. Worm gear according to one of the preceding claims,
**characterized**
**in that** the guide portion (18) is formed mirror-symmetrically with respect to a mirror plane which encompasses a radial line.

7. Worm gear according to one of Claims 1 to 6,
**characterized**
**in that** the guide portion (18) has two first guide surfaces (25) which point in mutually opposite circumferential directions and which preferably have a curved profile.

8. Worm gear according to one of Claims 1 to 7,
**characterized**
**in that** the guide portion (18) is arranged at a radial distance from a preferably cylindrical hub portion (13) of the drive output wheel (3).

9. Worm gear according to one of the preceding claims,
**characterized**
**in that** the lubricant reservoir (14) is formed by an annular chamber through which the drive output shaft (8) extends axially, said annular chamber being delimited preferably radially at the outside by a housing (7) and radially at the inside by the drive output shaft (8).

10. Motor-worm gear unit, in particular for a windscreen washing system of a motor vehicle, having an electric motor (6) which drives a worm gear (2) according to one of the preceding claims.

11. Motor-worm gear unit according to Claim 10,
**characterized**
**in that** the electric motor (6) and the worm gear (2) are arranged in a common housing (7) which is in the form of a shell housing with two shell parts and which is composed preferably of metal.

## Revendications

1. Transmission à vis sans fin, de préférence pour une unité de transmission à vis sans fin à moteur (1) d'une installation d'essuie-glace d'un véhicule automobile, comprenant une roue de sortie (3) et un arbre de sortie (8) accouplé en transmettant le couple à la roue de sortie (3), qui est supporté à rotation avec un palier d'arbre de sortie (10), dans laquelle sur la roue de sortie (3) sont prévus des moyens de transport (19) pour transporter du lubrifiant vers un réservoir de lubrifiant (14) associé au palier d'arbre de sortie (10), les moyens de transport (19) présentant au moins une première surface de guidage (25) s'étendant dans la direction radiale et formant un angle avec une radiale et/ou incurvée, qui est réalisée et disposée vers l'intérieur dans la direction radiale pour transporter du lubrifiant, la première surface de guidage (25) étant réalisée sous forme de flanc (24) d'une portion de guidage (18), **caractérisée en ce qu'**un canal de lubrifiant (26) s'étendant dans la direction radiale est formé par la première surface de guidage (25) de la portion de guidage (18) et par une deuxième surface de guidage (23) d'une portion de palier axial (16) espacée de la portion de guidage (18) dans la direction périphérique.

2. Transmission à vis sans fin selon la revendication 1,
**caractérisée en ce que**
les moyens de transport (19) sont réalisés de telle sorte qu'ils refoulent le lubrifiant en fonction du sens de rotation vers le réservoir de lubrifiant (14).

3. Transmission à vis sans fin selon la revendication 1 ou 2, **caractérisée en ce que** le palier d'arbre de sortie (10) est réalisé sous forme de palier fritté.

4. Transmission à vis sans fin selon la revendication 1,
**caractérisée en ce que**
la première surface de guidage (25) est courbée en forme de charrue et le canal de lubrifiant (26) est réalisé sous forme courbe.

5. Transmission à vis sans fin selon la revendication 1, **caractérisée en ce que**
l'étendue périphérique de la portion de guidage (18) diminue vers l'intérieur dans la direction radiale.

6. Transmission à vis sans fin selon l'une quelconque des revendications précédentes,
**caractérisée en ce que**
la portion de guidage (18) est réalisée avec une symétrie spéculaire par rapport à un plan de symétrie spéculaire recevant une radiale.

7. Transmission à vis sans fin selon l'une quelconque des revendications 1 à 6,
**caractérisée en ce que**
la portion de guidage (18) présente deux premières surfaces de guidage (25) orientées dans des directions périphériques opposées l'une à l'autre, qui présentent de préférence une allure incurvée.

8. Transmission à vis sans fin selon l'une quelconque des revendications 1 à 7,
**caractérisée en ce que**
la portion de guidage (18) est disposée à distance radiale d'une portion de moyeu de préférence cylindrique (13) de la roue de sortie (3).

9. Transmission à vis sans fin selon l'une quelconque des revendications précédentes,
**caractérisée en ce que**
le réservoir de lubrifiant (14) est réalisé sous forme d'espace annulaire traversé axialement par l'arbre de sortie (8), qui est de préférence limité radialement à l'extérieur par un boîtier (7) et radialement à l'intérieur par l'arbre de sortie (8).

10. Unité de transmission à vis sans fin à moteur, en particulier pour une installation d'essuie-glace d'un véhicule automobile, comprenant un moteur électrique (6) entraînant une transmission à vis sans fin (2) selon l'une quelconque des revendications précédentes.

11. Unité de transmission à vis sans fin à moteur selon la revendication 10,
**caractérisée en ce que**
le moteur électrique (6) et la transmission à vis sans fin (2) sont disposés dans un boîtier commun (7), de préférence en métal, réalisé sous forme de boîtier coque avec deux parties de coque.
